# EUROPEAN PATENT APPLICATION

(11) **EP 4 187 079 A1**
(43) Date of publication of application: **31.05.2023**
(21) Application number: 21210344.4
(22) Date of filing: 25.11.2021
(51) Int. Cl.: F02M 26/04, F02M 26/23, F02M 26/33, F02M 26/34, F02M 26/42, F02M 26/44, F02M 21/06

(54) **AN ARRANGEMENT FOR EXTRACTING HEAT FROM EXHAUST GAS ORIGINATING FROM AN ENGINE AND A METHOD THEREOF**

(71) Applicant: Alfa Laval Corporate AB, 221 00 Lund (SE)
(72) Inventor: MØRCH SØRENSEN, Torben, DK-9000 AALBORG (DK); RASMUSSEN, Henrik, DK-8920 RANDERS NV (DK); SKYTTE JORGENSEN, Lars, DK-9362 GANDRUP (DK)
(74) Representative: Alfa Laval Attorneys

(57) **Abstract**

An arrangement (200) for extracting heat from exhaust gas originating from an engine (102), and a related method (600), in which a scavenging air cooler (210) being configured to extract heat from the exhaust gas by a first cooling medium and thereby cooling the exhaust gas, a first extension module (220) being arranged after the scavenging air cooler (210) and being configured to receive the cooled exhaust gas from the scavenging air cooler (210) and extract further heat from the cooled exhaust gas and to vaporize liquified fuel into gaseous fuel by the extracted heat, wherein the gaseous fuel is supplied to the engine (102), and a connection (225) between the first extension module (220) and the engine (102) configured to supply the further cooled exhaust gas from the first extension module (220) to the engine (102) as charge air.

## Description

### Field of the invention

The invention relates to an arrangement for extracting heat from exhaust gas originating from an engine.

The invention also relates to a method for extracting heat from exhaust gas originating from an engine.

### Background art

Marine engines powered by oil or gas are well known in the art. Oil and gas fired boilers for marine steam production are also well known in the art. Usually, the choice of fuel for the boiler operation is made in relation to the fuels selected for the marine engine operation. Thus, if the marine engine is powered by oil, the boiler is often powered by oil as well. However, the marine engine and the boiler may be powered by different fuels. One drawback with most of the marine engines of today is marine air pollution, especially in the form of carbon dioxide (CO₂) being emitted from the marine engines when providing propulsion power. It is generally agreed that the CO₂ emissions, as well as other greenhouse gas emissions, have to be decreased in view of environmental aspects. As a solution, it is today well known to reduce emissions by introducing exhaust gas recirculation on ships having combustion engines as power source for the propulsion. The provision of exhaust gas recirculation typically involves installing a so-called scavenging air cooler. The scavenging air cooler has the function of cooling the exhaust gas originating from the engine, by extracting heat from the exhaust gas before the exhaust gas going back to the engine as charge air and thereby recirculating the exhaust gas.

A drawback with this solution is that the heat being extracted from the exhaust gas by the scavenging air cooler is typically dumped into seawater and thereby the heat or energy is wasted.

In an attempt to address some parts of this issue, document KR101358115 B1 discloses a waste heat recovering system including a working fluid system and a circulation water system. The circulation water system is interconnected with the cooling water system of the engine. An evaporator may be installed between the circulating water system and working fluid system which is arranged to exchange heat between circulating water and working fluid. The working fluid may be supplied from the evaporator, to a scavenging air cooler. However, the concept disclosed in KR101358115 B1 is a complex design involving several systems interconnected to each other at several points. This makes it cumbersome to build and it is complicated to control.

However, as will be explained below, the prior art does not disclose an arrangement which make efficiently use of the extracted heat from the exhaust gas and which adequately addresses the set of design criteria of making it possible to reduce the heat being wasted, e.g. into seawater, and especially, the prior art does not disclose how to provide an overall robust arrangement which may be used in a convenient manner over time when it comes to meeting said set of design criteria.

### Summary of the disclosure

It is an object of the disclosure to provide an arrangement which make efficiently use of the extracted heat from the exhaust gas and which adequately addresses the set of design criteria of making it possible to reduce the heat being wasted, e.g. into seawater. It is also an object to provide a arrangement which is robust.

This object has been achieved by an arrangement for extracting heat from exhaust gas originating from an engine, the arrangement comprising:
a scavenging air cooler being configured to extract heat from the exhaust gas by a first cooling medium and thereby cooling the exhaust gas,
a first extension module being arranged after the scavenging air cooler and being configured to receive the cooled exhaust gas from the scavenging air cooler and extract further heat from the cooled exhaust gas and to vaporize liquified fuel into gaseous fuel by the extracted heat, wherein the gaseous fuel is supplied to the engine, and
a connection between the first extension module and the engine configured to supply the further cooled exhaust gas from the first extension module to the engine as charge air.

Preferably, the engine is a marine engine powered by a gaseous fuel. Preferably, the fuel is ammonia or liquified natural gas (LNG). However, the fuel may be any fuel that is stored as a liquid with the need of evaporation. This is advantageous as it uses a more environmentally friendly fuel, namely ammonia or LNG, for powering the engine compared to e.g. fossil oil-based fuels typically used today. Preferably, the ammonia fuel and the LNG-fuel are stored as liquified fuel since the liquified ammonia and LNG takes less space compared to gaseous ammonia and gaseous natural gas (NG) and thereby less storage space is needed. As the engine is designed to be powered by gaseous fuel, the liquified fuel has to be transformed into gaseous fuel before being supplied to the engine. This transformation from liquified fuel to gaseous fuel is provided or at least aided by the first extension module of the present disclosure. By introducing the first extension module after the scavenging air cooler, an arrangement which utilize the heat being extracted from the exhaust gas for specific purposes instead of wasting it like today is achieved. Thus, the extracted heat is used for vaporizing the liquified fuel before being supplied to the engine.

The scavenging air cooler is arranged for cooling the exhaust gas such that the exhaust gas may be used in an efficient way when being supplied to the first extension unit for vaporizing the liquified fuel. Preferably, the scavenging air cooler extract heat from the exhaust gas by using the exhaust gas as a first medium and the first cooling medium as a second medium. Typically, the first cooling medium may be seawater, wherein the scavenging air cooler may be constantly cooled by the seawater.

Introducing the first extension module after the scavenging air cooler facilitates design and control of the first extension module. The scavenging air cooler is inherently easy to control, is inherently robust in its design, and is inherently flexible in the sense that it is capable of extracting anything from small quantities of heat to large quantities of heat, since its basic component is a heat exchanger typically exchanging heat from the exhaust gas to sea water. Thereby, the first extension module may be designed to be efficient within an operational span determined by the conceivable need of heat to vaporize the fuel for different engine loads. Thereby, the first extension module need not be designed to be able to handle all conceivable energy levels of the exhaust gases from the engine. The scavenge air cooler will in a sense act as a buffer protecting the first extension module. This makes it possible to reduce the operational span and thereby it is possible to reach a high efficiency of the first extension module. This in turn makes it possible to allow other modules to extract more heat from the exhaust gas before it is provided to the first extension module. Thus, the counter-intuitive positioning of the first extension module, which actively uses the heat in the exhaust gas, after the scavenging air cooler, which actually simply removes heat in the exhaust gas, actually makes it possible to make more efficient use of the heat in the exhaust gas. Thus, the arrangement provides an efficient use of the heat being extracted from the exhaust gas originating from the engine.

The arrangement is further advantageous in that the cooled exhaust gas, which has been cooled by both the scavenging air cooler and the first extension unit, being supplied to the engine as charge air. Thus, the exhaust gas being recirculated to the engine but having a lower temperature than when being discharged from the engine. In addition, the recirculated exhaust gas may, but preferably will, lead to a lower internal combustion temperature that leads to reduction in NOx particle emission.

The arrangement is yet further advantageous in that the scavenging air cooler and the first extension module is capable of cooling the exhaust gas to a cooler temperature than a conventional scavenging air cooler. This is advantageous in that the cooler charge air will comprise more oxygen which will lead to a more efficient combustion compared to when the conventional scavenging air cooler is used.

It may in this context be noted that the term "after" may, but does not necessarily need to, mean that the first extension module is physically located after the scavenging air cooler. After is primarily intended to refer to a position as seen along the flow path of the exhaust gas. The first extension module is located after the scavenging air cooler as seen along the flow path of the exhaust gas since the exhaust gas supplied to the first extension module is exhaust gas which has already passed the scavenging air cooler. If the first extension module is a module being physically separate from the scavenging air cooler, the first extension module may e.g. be located side by side with the scavenging air cooler or may even be located closer to the engine than the scavenging air cooler.

The first extension module may comprise a first heat exchanger configured to exchange heat from the exhaust gas from the scavenging air cooler to the liquified fuel by using the exhaust gas as a first medium and the liquified fuel as a second medium of the first heat exchanger.

The first heat exchanger may be a direct heat exchanger in which the given fuel is connected directly to the first heat exchanger. This provides a compact design in which the first heat exchanger is capable of extracting heat from the exhaust gas in a controlled and efficient way. In this part of the arrangement, there is less heat to extract from the exhaust gas compared to other parts, being arranged before the first extension module, of the arrangement. The first heat exchanger is capable of making efficient use of the exhaust gas by vaporizing the liquified fuel and by supplying the cooled gas as charge air to the engine using the exhaust gas. There is no, or limited amount of, exhaust gas which is wasted from the first heat exchanger.

The first heat exchanger is further advantageous in that it may replace a boiler, e.g. an oil-fired boiler, which may be comprised in conventional arrangement for vaporizing liquified fuel. By being able to replace the boiler, the amount of emission, e.g. CO₂ emissions, may be reduced.

Preferably, the first heat exchanger is connected to a fuel tank from which the liquified fuel is supplied to the first heat exchanger. Preferably, the first heat exchanger is a plate heat exchanger, a shell heat exchanger, or a tube heat exchanger.

The first extension module may comprise a first and a second heat exchanger being interconnected in a heat exchange circuit and jointly exchanging heat from the exhaust gas from the scavenging air cooler to the liquified fuel by using the exhaust gas as a first medium of the first heat exchanger and by using the liquified fuel as a second medium of the second heat exchanger, and by using a common heat exchange medium as a second medium in the first heat exchanger and as a first medium in the second heat exchanger.

The first and second heat exchanger may form an indirect heat exchanger in which the first and second heat exchangers e.g. may be located side by side or the first heat exchanger may even be located closer to the scavenging air cooler and the second heat exchanger may even be located closer to the engine. This provides a flexible design. This further provides a better control and regulation of the extracted heat.

The first and second heat exchanger may be connected by a closed loop forming the heat exchanger circuit in which the common heat exchange medium may flow. Preferably, the common heat exchange medium is hot water, glycol, or a thermal fluid. The common heat exchange medium that may be used may be based on which medium that gives the best heat transfer and performance in a given situation.

Preferably, the second heat exchanger may be connected to the fuel tank from which the liquified fuel is supplied to the second heat exchanger. The first heat exchanger may be capable of supplying the cooled exhaust gas as charge air to the engine. The second heat exchanger may be capable of vaporizing the liquified fuel by the extracted heat.

Preferably, the first heat exchanger is a plate heat exchanger, shell heat exchanger or a tube heat exchanger. The first heat exchanger may be an exhaust gas boiler. Preferably, the second heat exchanger is a plate heat exchanger, shell heat exchanger or a tube heat exchanger.

The first extension module may be integrated in the scavenging air cooler.

The first extension module may be integrated in a bottom part of the scavenging air cooler. The first extension module may be integrated in a top part of the scavenging air cooler. Integrated may refer to a case where the first extension module is integrated by the scavenging air cooler being formed of a set of heat exchanger plates and the first extension module being formed of a set of heat exchanger modules forming a common stack of heat exchanger plates. The common stack may e.g. be brazed together or be clamped together by a set of endplates. Integrated may also refer to a case where the first extension module is a self-contained module fixedly attached to the scavenging air cooler. In any case, this provides for a compact design.

By integrating the first extension module in the bottom part of the scavenging air cooler provides for that the first extension module being arranged after the scavenging air cooler as seen along the flow of the exhaust gas. The bottom part of the scavenging air cooler may be referred to as an outlet of the scavenging air cooler.

If the first extension module is integrated in the scavenging air cooler, the first extension module and the scavenging air cooler may be designed and produced as one unit.

The first extension module may be separated from and arranged in series with and connected to the scavenging air cooler via a first exhaust gas supply line being configured to receive the cooled exhaust gas from the scavenging air cooler and to supply the cooled exhaust gas to the first extension module.

This provides for a flexible design which e.g. may be used to provide a compact and efficient design of the first extension module. This e.g. facilities a design where the first extension module comprises a first heat exchanger configured to exchange heat from the exhaust gas from the scavenging air cooler to the liquified fuel by using the exhaust gas as a first medium and the liquified fuel as a second medium of the first heat exchanger.

The first extension module may be connected directly to the scavenging air cooler. The first extension module may be connected with a flexible hose or by a tubing to the scavenging air cooler. The first extension module may be connected with exhaust gas funnel to the scavenging air cooler. The separation allows the connection between the first extension module and the scavenging air cooler to be based on ship building practice, which in turn facilitates maintenance. It should be noted that other kinds connections between the first extension module and the scavenging air cooler may be possible as well, as long as the connection is capable of allowing the exhaust gas to flow from the scavenging air cooler to the first extension module.

If the first extension module is separated from the scavenging air cooler, the first extension module and the scavenging air cooler may be designed and produced as separated units.

The arrangement may further comprise a second extension module being arranged before the scavenging air cooler and being configured to extract heat from the exhaust gas and supply the cooled exhaust gas to the scavenging air cooler.

This provides for an efficient and flexible design in which the exhaust gas originating from the engine is cooled before being supplied to the scavenging air cooler. The second extension module may be capable of extracting as much heat as possible from the exhaust gas. Preferably, the second extension module is capable of extracting larger quantities of heat compared to the first extension module. This is further advantageous in that the less heat the scavenging air cooler has to extract, the less heat may need to be dumped into e.g. the seawater. Thus, the second extension module is advantageous in that the extracted energy is utilized for beneficial purposes even further.

Introducing the second extension module to the arrangement provides for that the exhaust gas may be cooled more than the arrangement without the second extension module without having to dump to much heat into the sea. This is advantageous in that the charge air will comprise more oxygen which will lead to a more efficient combustion compared to when the second extension module is excluded.

It may in this context be noted that the term "before" may, but does not necessarily need to, mean that the second extension module is physically located before the scavenging air cooler. Before is primarily intended to refer to a position as seen along the flow path of the exhaust gas. The second extension module is located before the scavenging air cooler as seen along the flow path of the exhaust gas since the exhaust gas supplied to the second extension module is exhaust gas which has not passed the scavenging air cooler yet. If the second extension module is a module being physically separate from the scavenging air cooler, the second extension module may e.g. be located side by side with the scavenging air cooler or may even be located further from the engine than the scavenging air cooler.

The first extension module and the second extension module may be arranged in connection. If that is the case, both the first and second extension modules are arranged before the scavenging air cooler.

The second extension module may be connected to a heat-to-power conversion arrangement configured to convert heat extracted from the exhaust gas by the second extension module into power.

The heat-to-power conversion arrangement may be any kind of arrangement configured to transfer heat into power. Preferably, it is a system comprising a medium circulating in a circuit comprising an evaporator, condenser, and a compressor with the evaporator extracting heat from the exhaust gas. Most preferably the heat-to-power conversion arrangement is an Organic Rankine Cycle (ORC). This is advantageous in that the heat extracted by the second extension module may be used as power, e.g. electrical energy. It is desirous to transfer as much heat energy as possible and thereby to produce as much electrical energy as possible. The second extension module may be running continuously with the engine. The second extension module may be closed or shut off, if the power is not needed. In which way the second extension module is running depends on the ship design and the operational profile of the ship. Thus, by connecting the second extension module to the heat-to-power conversion arrangement, the second extension module makes efficient use of the exhaust gas, namely by producing electrical energy by using the heat-to-power conversion arrangement.

The second extension module may comprise a third heat exchanger. The third heat exchanger may be configured to extract heat from the exhaust gas originating from the engine. If the heat exchanger is connected to the heat-to-power conversion arrangement, the exhaust gas may be used as a first medium and the medium circulating in the circuit as a second medium of the third heat exchanger. Preferably, the medium circulating in the circuit is hot water, glycol, or thermal fluid. Preferably, the third heat exchanger is a plate heat exchanger, shell heat exchanger or a tube heat exchanger.

The second extension module may be integrated in, preferably in a top part of, the scavenging air cooler.

Integrated may refer to a case where the second extension module is integrated by the scavenging air cooler being formed of a set of heat exchanger plates and the first extension module being formed of a set of heat exchanger plates forming a common stack of heat exchanger plates. The common stack may e.g. be brazed together or be clamped together by a set of endplates. Integrated may also refer to a case where the second extension module is a self-contained module fixedly attached to the scavenging air cooler. In any case, this provides for a compact design.

By integrating the second extension module in the top part of the scavenging air cooler provides for that the second extension module being arranged before the scavenging air cooler as seen along the flow of the exhaust gas. The top part of the scavenging air cooler may be referred to as an inlet of the scavenging air cooler.

If the second extension module is integrated in the scavenging air cooler, the second extension module and the scavenging air cooler may be designed and produced as one unit.

The second extension module may be separated from and arranged in series with and connected to the scavenging air cooler via a second exhaust gas supply line being configured to supply the cooled exhaust gas from the second extension module to the scavenging air cooler.

This provides for a flexible design which e.g. may be used to provide a compact and efficient design of the second extension module. This e.g. facilities a design where the second extension module comprises a third heat exchanger configured to exchange heat from the exhaust gas originating from the engine to a third cooling medium by using the exhaust gas as a first medium and the third cooling medium as a second medium of the third heat exchanger. The second extension module may be connected directly to the scavenging air cooler. The second extension module may be connected with a flexible hose or tubing to the scavenging air cooler. The second extension module may be connected with exhaust gas funnel to the scavenging air cooler. The connection between the second extension module and the scavenging air cooler may be based on ship building practice. It should be noted that other connections between the first extension module and the scavenging air cooler may be possible as well.

If the second extension module is separated from the scavenging air cooler, the second extension module and the scavenging air cooler may be designed and produced as different units.

The above mentioned object has also been achieved in accordance with a method for extracting heat from exhaust gas originating from an engine, the method comprising:
supplying the exhaust gas originating from the engine to a scavenging air cooler,
extracting heat from the exhaust gas in the scavenging air cooler by a first cooling medium and thereby cooling the exhaust gas,
supplying the cooled exhaust gas from the scavenging air cooler to a first extension module,
extracting heat from the cooled exhaust gas in the first extension module by a second cooling medium,
vaporizing liquified fuel into gaseous fuel by the extracted heat in the first extension module,
supplying the gaseous fuel from the first extension module to the engine, and
supplying the further cooled exhaust gas from the first extension module to the engine as charge air.

The further different preferred embodiments mentioned above in relation to the arrangement are equally applicable to the method.

The arrangement is preferably placed onboard a ship. The method is preferably performed onboard a ship. However, it may be noted that neither the arrangement, nor the method, is limited to be used onboard a ship. This may e.g. be the case, apart from ships, in other marine applications. It may e.g. be platforms, such as platforms of the kind used for drilling for oil or gas. The arrangement and method may also be useful for land-based applications. The arrangement and method may e.g. be used for logging or mining applications.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

It may in this context be noted that first, second and third, such as e.g. used when referring to a first cooling medium, a second cooling medium, and a third cooling medium, are intended to act as labels allowing the reader to make a distinction between them. The different cooling media referred to form part of different cooling circuits. The first, second, and/or third cooling mediums may, but need not, be of the same kind. It may also be noted that although different embodiments may involve different number of cooling medium circuits, the same cooling medium is provided with the same label throughout the description although some embodiments do not include all the intervening labels.

### Brief Description of the Drawings

The above, as well as additional objects, features and advantages of the present disclosure, will be better understood through the following illustrative and non-limiting detailed description of preferred embodiments of the present disclosure, with reference to the appended drawings, where the same reference numerals will be used for similar elements, wherein:
Figure 1 discloses an engine process comprising an arrangement for extracting heat from exhaust gas originating from an engine.
Figure 2 discloses a first embodiment of the arrangement disclosed in Fig. 1 for extracting heat from exhaust gas originating from an engine.
Figure 3 discloses a second embodiment of the arrangement disclosed in Fig. 1 for extracting heat from exhaust gas originating from an engine.
Figure 4 discloses a third embodiment of the arrangement disclosed in Fig. 1 for extracting heat from exhaust gas originating from an engine.
Figure 5 discloses a fourth embodiment of the arrangement disclosed in Fig. 1 for extracting heat from exhaust gas originating from an engine.
Figure 6 discloses a flow chart illustrating a method for extracting heat from exhaust gas originating from an engine.

### Description of Embodiments

The present disclosure will now be described more fully hereinafter with reference to the accompanying drawings, in which currently preferred embodiments of the disclosure are shown. This disclosure may, however, be embodied in many different forms and should not be construed as limited to the embodiments set forth herein; rather, these embodiments are provided for thoroughness and completeness, and fully convey the scope of the disclosure to the skilled person. It should also be noted that, although not illustrated, the arrangement may comprise additional valves, control signal transmitters, flow meters, circulation pumps and other similar components according to relevant rules and legislations and normal ship building practice. The provision of such additional components is routine matter for a person skilled in the art and the inclusion of all such components would render the schematic drawings unclear.

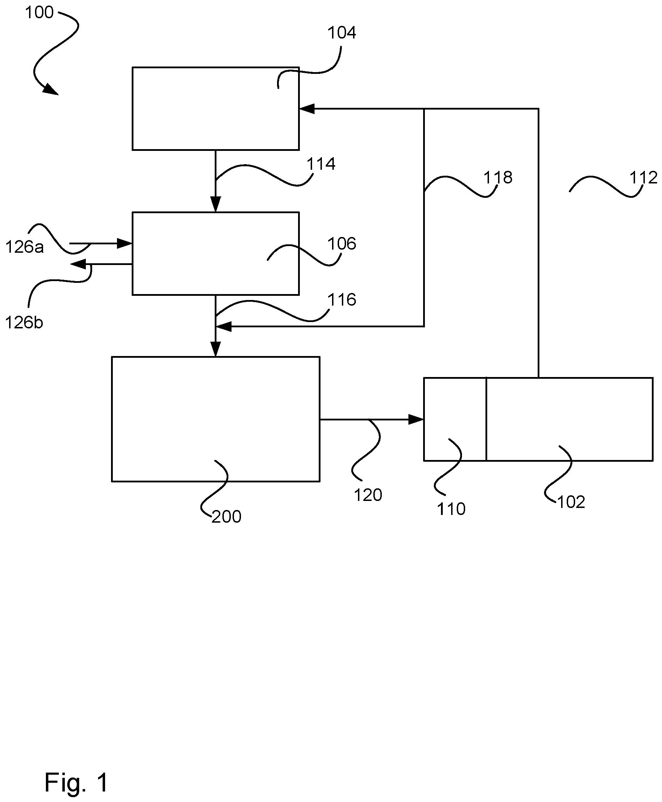

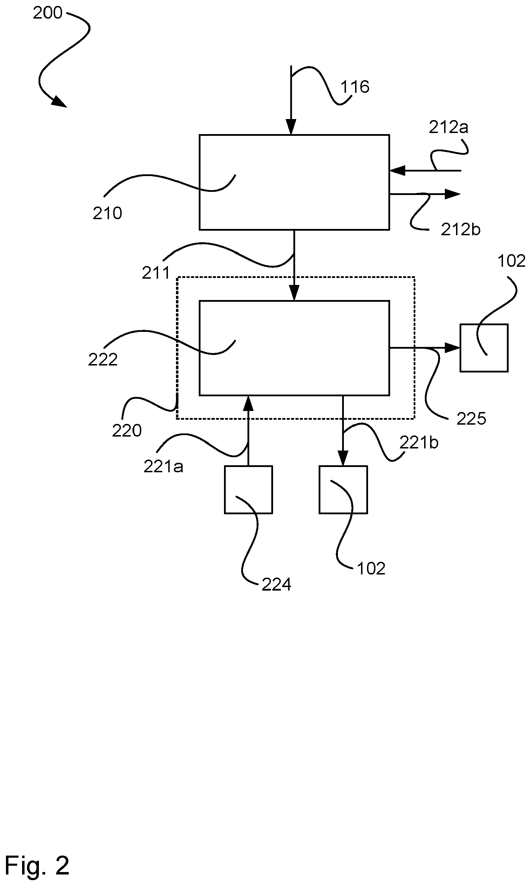

With reference to figure 1, there is disclosed an engine process 100 according to the present disclosure. The engine process 100 comprises an engine 102, an exhaust gas receiver 104, and a turbo charger 106. The engine process 100 further comprises an arrangement 200 for extracting heat from exhaust gas originating from the engine 102. The arrangement 200 is discussed in further detail in connection with Figs 2-5. It should be noted that engine process may be designed in various way.

The engine 102 is connected to the exhaust gas receiver 104 by a first supply line 112. The exhaust gas receiver 104 may be referred to as forming part of engine 102. The exhaust gas receiver 104 is connected to the turbo charger 106 by a second supply line 114. The turbo charger 106 is connected to the arrangement 200 by a third supply line 116. The first supply line 112 may be connected to the third supply line 116 by a fourth supply line 118, also referred to as an exhaust gas recirculation EGR supply line. The arrangement 200 is connected to a scavenging air receiver 110 by a fifth supply line 120. The scavenging air receiver 110 may also be referred to as forming part of the engine 102. Throughout the figures 2-5, the scavenging air receiver 210 is not illustrated but should be understood to be a part of the engine 102 and positioned as shown in figure 1. The scavenging air receiver 110 may act as a storage place from which the engine 102 may receive air when needed. The turbo charger 106 may have an air inlet 126a and an exhaust gas outlet 126b.

The EGR supply line 118forms an exhaust gas recirculation EGR of the engine process 100. The purpose of the exhaust gas recirculation EGR of the engine process 100 is to reduce nitrogen oxides, also known as NOx. The engine process 100 may be configured to run in an exhaust gas recirculation EGR mode in which the exhaust gas is supplied to the arrangement 200 via the first, second and third supply line 112, 114, 116. Alternatively, the exhaust gas may be supplied to the arrangement 200 via the first, second and third supply line 112, 114, 116 and additionally via the EGR supply line 118. If that is the case, 60-80%, preferably around 70%, of the exhaust gas is supplied to the arrangement 200 via the first, second and third supply line 112, 114, 116 and 20-40%, preferably around 30%, of the exhaust gas is supplied to the arrangement via the EGR supply line 118. The purpose of running the engine process 100 in the EGR mode is to recirculate a portion, approximately 30-50%, of exhaust gas in the engine process 100. By recirculating the exhaust gas the peak combustion temperature in the engine 102 may be reduced. Reducing the peak combustion temperature in the engine 102 is advantageous in that the formation of NOx particles may be reduced. The EGR mode is discussed in further detail in connection with Fig. 2.

With reference to Figs 2-5, the arrangement 200 introduced in connection with Fig. 1 is illustrated and discussed in further detail. The arrangement 200 is configured to extract heat from the exhaust gas originating from the engine 102. Typically, the exhaust gas being supplied to the arrangement 200 has a temperature of 200-450°C. The exhaust temperature may vary from engine to engine.

The arrangement 200 comprises a scavenging air cooler 210. The scavenging air cooler 210 is configured to extract heat from the exhaust gas by a first cooling medium and thereby cooling the exhaust gas. The exhaust gas originates from the engine 102 and may be supplied from the engine by the third supply line 116 via one or more of the supply lines 112, 114, 118, as discussed above. Thus, the exhaust gas may be supplied to the arrangement 200 via exhaust gas receiver 104 and the turbo charger 106 and/or via the EGR of the engine process 100. Preferably, if the exhaust gas being supplied to the arrangement 200 via the exhaust gas receiver 104, the turbo charger 106 and the EGR of the engine process 100, the exhaust gas from the different sources may be mixed in the third supply line 116 before entering the arrangement 200. The exhaust gas may be used as a first medium and the first cooling medium may be used as a second medium of the scavenging air cooler 210. The scavenging air cooler 210 may comprise a first cooling medium inlet 212a and a first cooling medium outlet 212b. The first cooling medium inlet 212a is arranged to supply the first cooling medium to the scavenging air cooler 210. The first cooling medium outlet 212b is arranged to discharge the first cooling medium from the scavenging air cooler 210 when heat has been exchanged between the first and second cooling medium. The scavenging air cooler 210 may be continuously cooled by the first cooling medium. Preferably, the first cooling medium is seawater. In that case, the first cooling medium inlet 212a is configured to supply seawater to the scavenging air cooler 210 and the first cooling medium outlet 212b is configured to discharge the seawater which has been heated by extracting heat from the exhaust gas by. By using seawater as a cooling medium for the scavenging air cooler 210 is well-known in the art according to normal ship building practise.

The arrangement 200 further comprises a first extension module 220. The first extension module 220 is arranged after, as seen along the flow of the exhaust gas, the scavenging air cooler 210. The first extension module 220 is configured to receive the cooled exhaust gas from the scavenging air cooler 210. The first extension module 220 is configured to extract further heat from the cooled exhaust gas by a second cooling medium and thereby cooling the exhaust gas even further. The first extension module 220 may be configured to supply the further cooled exhaust gas to the engine 102 as charge air via a connection 225 between the first extension module 220 and the engine 102 via the scavenging air receiver 110. Preferably, the charge air being supplied to the engine 102 has a temperature of less than 40°C. However, the suitable temperature of the charge air may vary depending on type of engine 102.

The first extension module 220 may comprise a liquified fuel inlet 221 a configured to connect the first extension module 220 and a storage tank 224. The storage tank 224 may be arranged to store liquified fuel which may be used as fuel for the engine 102. The liquified fuel may be supplied to the first extension module 220 via the liquified fuel inlet 221a. The first extension module 220 is configured to vaporize the liquified fuel into gaseous fuel by the extracted heat from the exhaust gas. The first extension module 220 may further comprise a gaseous fuel outlet 221b configured to connect the first extension module 220 and the engine 102. The first extension module 220 is configured to supply the gaseous fuel to the engine 102 via the gaseous fuel outlet 221b. This is advantageous in that the engine 102 should typically be powered by the gaseous fuel. However, the fuel is stored as liquified fuel as the liquified fuel typically takes less space, and thus need less storage space, compared to the gaseous fuel.

It may in this context be noted that the engine 102 is in Figs. 2-5 indicated as two small boxes. The first extension module 220 typically comprises two outlets being connected to the engine 102; the connection 225 configured to supply the charge air to the engine 102 and the gaseous fuel outlet 221 bconfigured to supply the gaseous fuel to the engine 102. The connection 225 is connected typically connected to the scavenging air receiver 110 of the engine 102. The connection 221b is typically connected to a fuel supply system of the engine 102.

The first extension module 220 may comprise a first heat exchanger 222. The first heat exchanger 222 may be configured to receive the cooled exhaust gas from the scavenging air cooler 210. The first heat exchanger 222 may be configured to exchange heat from the cooled exhaust gas to the liquified fuel by using the cooled exhaust gas as a first medium and the liquified fuel as a second medium of the first heat exchanger 222. Thereby, the first heat exchanger 222 is configured to extract heat from the cooled exhaust gas and thus cool the exhaust gas even further. Preferably, the first heat exchanger 222 comprises the liquified fuel inlet 221a and the gaseous fuel outlet 221b as discussed above. Preferably, the first heat exchanger 222 is configured to supply the further cooled exhaust gas to the engine 102 as charge air via the connection 225 between the first heat exchanger 222 and the engine 102. Preferably, the first heat exchanger 222 is configured to supply the gaseous fuel to the engine 102 via the gaseous fuel outlet 221b. The first heat exchanger 222 may be a plate heat exchanger, a shell heat exchanger, or a tube heat exchanger. Alternatively, the first extension module 220 may comprise a boiler configured to produce steam by exhaust gas which is used for vaporizing the liquified fuel.

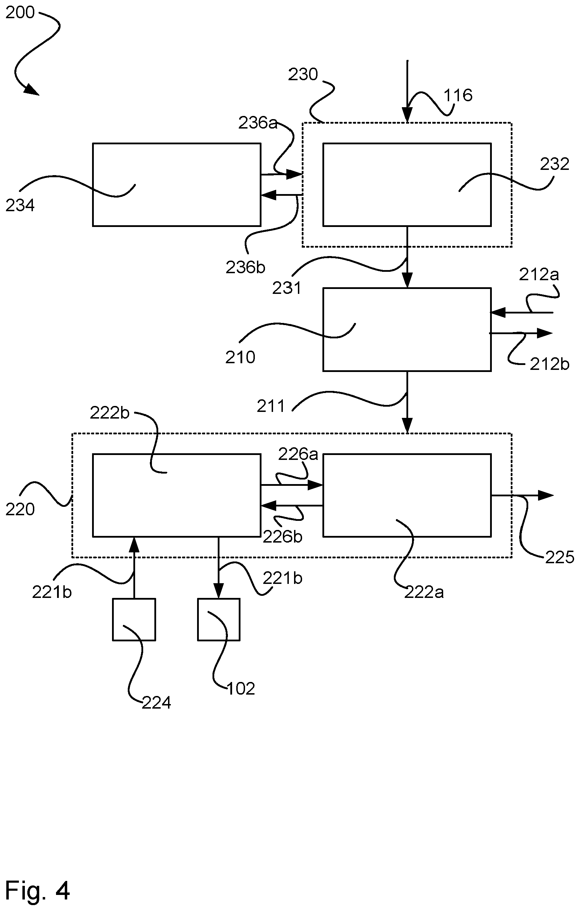

With reference to Fig. 4, the first extension module 220 may comprise a first heat exchanger 222a and a second heat exchanger 222b. The first and second heat exchanger 222a, 222b may be interconnected in a heat exchange circuit and jointly exchanging heat from the exhaust gas from the scavenging air cooler 210 to the liquified fuel. The exhaust gas may be used as a first medium of the first heat exchanger 222a and the liquified fuel may be used as a second medium of the second heat exchanger 222b. The second cooling medium may be a common heat exchange medium interconnecting the two heat exchangers 222a, 222b. The common heat exchange medium may be used as a second medium in the first heat exchanger 222a and as a first medium in the second heat exchanger 222b.

Thus, the first heat exchanger 222a may be configured to exchange heat from the exhaust gas from the scavenging air cooler 210 to the common heat exchange medium by using the exhaust gas as the first medium and the common heat exchange medium as the second medium of the first heat exchanger 222a. The second heat exchanger 222b may be configured to exchange heat from the common heat exchange medium from the first heat exchanger 222a to the liquified fuel by using the common heat exchange medium as the first medium and the liquified fuel as the second medium of the second heat exchanger 222b. Preferably, the second heat exchanger 222b comprises the liquified fuel inlet 221a and the gaseous fuel outlet 221b as discussed above. Preferably, the first heat exchanger 222a is configured to supply the further cooled exhaust gas to the engine 102 as charge air via the connection 225 between the first heat exchanger 222a and the engine 102.

The first heat exchanger 222a may comprise a heat exchanger inlet 226a and a heat exchanger outlet 226b which both are configured to interconnect the first and the second heat exchanger 222a, 222b. The heat exchanger inlet 226a is configured to supply a common heat exchange medium from the second heat exchanger 222b to the first heat exchanger 222a. The heat exchanger outlet 226b is configured to supply common heat exchange medium from the first heat exchanger 222a to the second heat exchanger 222b. The common heat exchange medium supplied from the first heat exchanger 222a to the second heat exchanger 222b may have an increased temperature compared to the common heat exchange medium being supplied the other way. This is due to that the common heat exchanger medium has removed heat from the exhaust gas in the first heat exchanger 222a.

Preferably, the first and second heat exchangers 222, 222a, 222b is made of stainless steel, or the like, which is capable of taking fuels of certain characteristics such that LNG or ammonia which may be harsh on materials.

As said above, the purpose of the arrangement 200 is to extract as much energy as possible from the exhaust gas and to utilize the extracted energy for specific purposes. The purpose of the scavenging air cooler 210 is to cool the exhaust gas to such an extent that the first extension module 220 is on one hand able to further cool the exhaust gas to provide the charge air at a desired temperature and on the other hand use the heat in the exhaust gas to evaporate the fuel. Preferably, the scavenging air cooler 210 and the first extension module 220 is designed depending on the amount of energy that should be extracted from the exhaust gas. The first extension module 220 has a dimensioning cooling capacity based on the desired evaporation of the fuel. This may also be referred to as a heat removal capacity of the first extension module 220. The SAC is dimensioned and controlled to extract any heat form the exhaust gas exceeding this heat removal capacity.

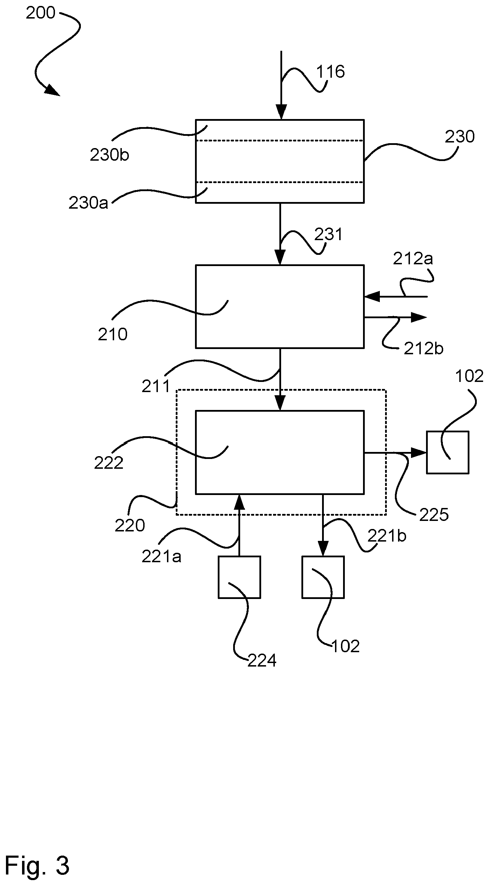

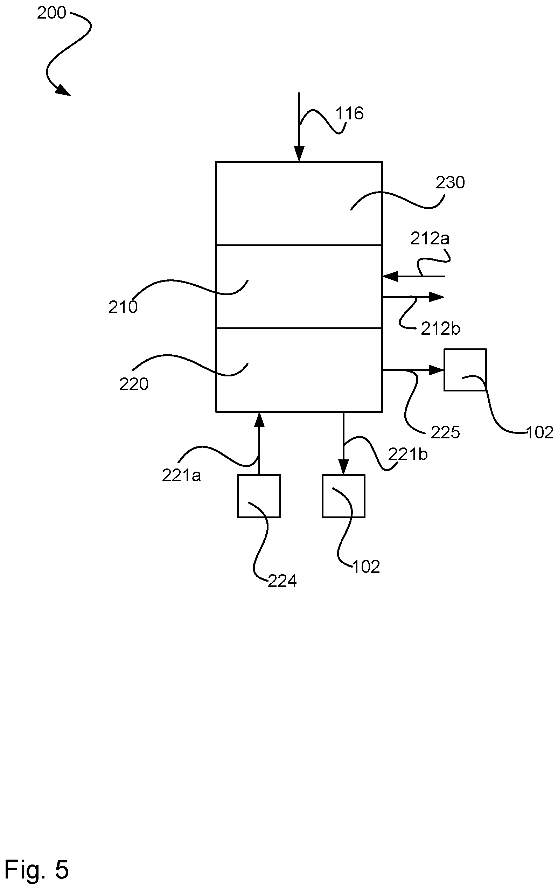

With reference to Fig. 3, but as also illustrated in Figs 4 and 5, the arrangement may further comprise a second extension module 230. The second extension module 230 may be arranged before, as seen along the flow of the exhaust gas, the scavenging air cooler 210. The second extension module 230 may configured to extract heat from the exhaust gas originating from the engine by a third cooling medium and thereby cooling the exhaust gas. The exhaust gas originates from the engine 102 and may be supplied from the engine by the third supply line via one or more of the supply lines 112, 114, 118 as discussed above. Thus, the exhaust gas may be supplied to the arrangement 200 via exhaust gas receiver 104 and the turbo charger 106 and/or via the EGR of the engine process 100. The second extension module 230 may be configured to supply the cooled exhaust gas to the scavenging air cooler 210.

Although not illustrated, the first extension module 220 and the second extension module 230 may be connected. If that the case, the first and second extension modules 220, 230 are arranged before, as seen along the flow of the exhaust gas, the scavenging air cooler 210.

Referring back to Fig. 4, the second extension module 230 may comprise a third heat exchanger 232. The third heat exchanger 232 may be configured to receive the exhaust gas originating from the engine 102. The second heat exchanger 232 may be configured to exchange heat from the exhaust gas to the third cooling medium by using the exhaust gas as a first medium and the third cooling medium as a second medium of the third heat exchanger 232. Thereby, second heat exchanger 232 is configured to extract heat from the exhaust gas and thus cool the exhaust gas. Preferably, the third cooling medium is hot water, glycol, steam, or thermal fluid.

The second extension module 230 may be connected to a heat-to-power conversion arrangement 234. The heat-to-power conversion arrangement 234 is configured to convert heat extracted from the exhaust gas by the second extension module 230 into power. The second extension module 230 and the heat-to-power conversion arrangement 234 may be connected as a circuit in which the third cooling medium is circulating. The second extension module 230 may comprise a second extension module inlet 236a and a second extension module outlet 236b which both are configured to connect the second extension module 230 and the heat-to-power conversion arrangement 234. The second extension module inlet 236a is configured to supply the third cooling medium from the heat-to-power conversion arrangement 234 to the second extension module 230. The second extension module outlet 236b is configured to supply the third cooling medium from the second extension module 230 to the heat-to-power conversion arrangement 234. The third cooling medium supplied from the second extension module 230 to the heat-to-power conversion arrangement 234 may have an increased temperature compared to the third cooling medium being supplied the other way. This is due to that the third cooling medium has removed heat from the exhaust gas in the second extension module 230 and due to the third cooling medium having lost heat to the heat-to-power conversion arrangement 234. Preferably, the heat-to-power conversion arrangement 234 is an Organic Rankine Cycle ORC.

Although not illustrated, the arrangement may comprise a further heat exchanger being arranged between the second extension module 230 and the heat-to-power conversion arrangement 234. This design is possible if the second extension module 230 is an economizer that produces steam. The steam produced by the economizer is thereafter received by the further heat exchanger which in turn is operating in relation to the heat-to-power conversion arrangement 234 as discussed above.

Referring back to Fig. 3, when the engine process 100 is configured to run in the EGR mode, the second extension module 230 may be configured to run in a cleaning mode. The cleaning mode is capable of removing particles which may be stuck on the second extension module 230 as a consequence of running the engine process 100 in the EGR mode. The particles may be present in the exhaust gas and may be stuck in the second extension module 230. Typically, the particles are stuck in the upper part of the second extension module 230. However, the particles may be stuck in other parts of the second extension module 230 as well, but typically in some part of the second extension module 230. The cleaning mode may be performed with pressurized water, pressurized steam, or pressurized air being supplied through nozzles and thereby more or less blowing away the particles. The cleaning mode may run continuously together with the engine 102. The cleaning mode may run in sequences in predetermined periods. By running the cleaning mode in sequences, the power consumption to the cleaning mode may be reduced compared to continuously running the cleaning mode.

The water used for blowing the particles away has to be captured by a water capture 230a and directed away from the second extension module 230, to avoid water going into the engine 102. The water may be captured and directed by using guide vanes and/or channels and/or by a build-in demister. Herein, the biggest water droplets in the second extension module 230 should be captured in the water capture 230a, wherein the smaller water droplets may be evaporated by the scavenging air cooler 210 or the first extension module 220 such that water free charge air is supplied to the engine 102.

The cleaning mode may run with the heat and power arrangement 234. The cleaning mode may run as a stand-alone function.

Alternatively, the second extension module 230 may comprise a replaceable top layer 230b. This may provide a quick solution of removing particles when particle clogging scenario may occur. The replaceable top layer 230b may be designed such that it easily may be taken in and out. The replaceable top layer 230b may be replaced with a clean top layer. The replaceable top layer 230a may be cleaned manually before being put back. The replaceable top layer may be designed in an optimal size to catch most particles. The replaceable top layer 230b may be integrated in, preferably in a top part of, the second extension module 230. The replaceable top layer 230b may be separated from and arranged in series with and connected to the second extension module 230. It should be noted that, when referring to the replaceable top layer, it means that it is not needed to replace top entire heat exchanger, if the second extension module 230 comprises the third heat exchanger 232, but only a top section where the particles are stuck. Thus, it may be a plug and play cartridge.

When the arrangement 200 comprises the first and the second extension module 220, 230 as well as the scavenging air cooler 210, the second extension module 230 is configured to extract as much energy as possible from the exhaust gas to the heat-to-power conversion arrangement 234. However, it is preferred that there is still left heat sufficient to evaporate the fuel in the first extension module 220. Preferably, with this design, the scavenging air cooler 210 and the first extension module 220 may have a smaller size, being able to extract less energy from the exhaust gas, compared to the design in which the second extension module 230 is excluded, as discussed above.

With reference to figure 5, a compact embodiment of the arrangement 200 is illustrated in further detail. In Fig. 5, the first extension module 220 is integrated in the scavenging air cooler 210. Alternatively, or in combination, the second extension module 230 is integrated in the scavenging air cooler 210. Integrated may refer to a case where the first and/or second extension module is integrated by the scavenging air cooler such that the first and/or second extension module and the scavenging air cooler is formed as one unit.

Referring back to Figs 2-4, a flexible embodiment of the arrangement 200 is illustrated in further detail. In Figs 2-4, the first extension module 220 is separated from the scavenging air cooler 210. The first extension module 220 is arranged in series with the scavenging air cooler 210. The first extension module 220 is connected to the scavenging air cooler 210. The first extension module 220 may be connected to the scavenging air cooler 210 via a first exhaust gas supply line 211. The first exhaust gas supply line 211 may be configured to receive the cooled exhaust gas from the scavenging air cooler 210 and to supply the cooled exhaust gas to the first extension module 220. Moreover, in Figs 2-4, the second extension module 230 is separated from the scavenging air cooler 210. The second extension module 230 is arranged in series with the scavenging air cooler 210. The second extension module 230 is connected to the scavenging air cooler 210. The second extension module 230 may be connected to the scavenging air cooler 210 via a second exhaust gas supply line 231. The second exhaust gas supply line 211 may be configured to supply the cooled exhaust gas to the scavenging air cooler 210 from the second extension module 220.

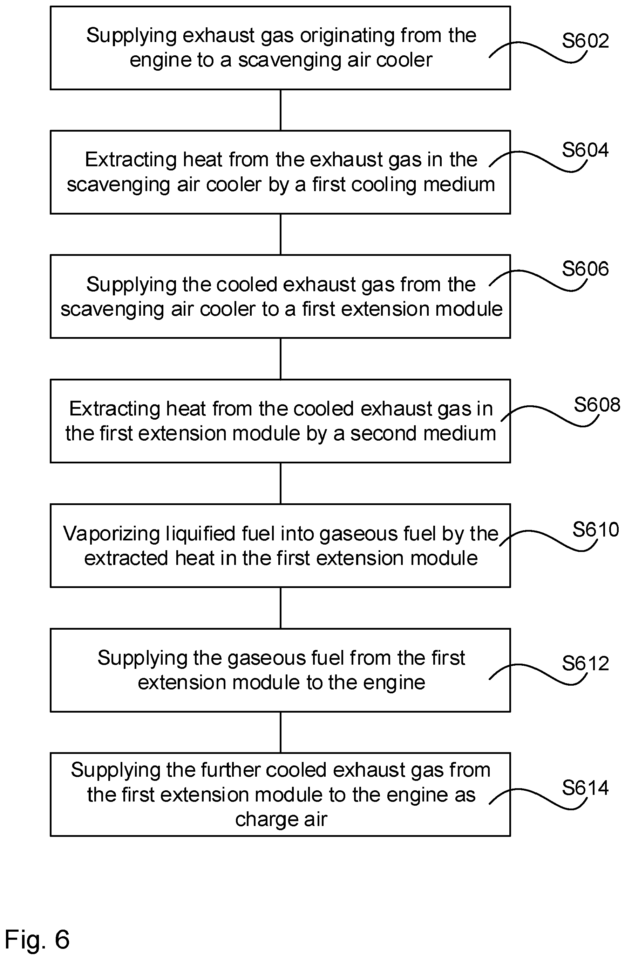

With reference to Fig. 6, a flow chart illustrating a method 600 for extracting heat from exhaust gas originating from an engine 102 is illustrated by way of example.

Generally, a first step S602 of the method 600 may be to supply the exhaust gas originating from the engine 102 to the scavenging air cooler 210. In a second step S604, heat may be extracted from the exhaust gas in the scavenging air cooler 210 by a first cooling medium and thereby cooling the exhaust gas. Preferably, the first cooling medium is seawater which continuously cools the scavenging air cooler 210.

Thereafter, in a third step S606, the cooled exhaust gas may be supplied from the scavenging air cooler 210 to the first extension module 220. In a fourth step S608, heat may be extracted from the cooled exhaust gas in the first extension module 220 by a second cooling medium. The second cooling medium may be the fuel in case there is one heat exchanger directly transferring heat from the exhaust gas to the fuel or may be a separate medium interconnecting two heat exchangers. In a fifth step S610, the liquified fuel may be vaporized into gaseous fuel by the extracted heat in the first extension module 220. Thereafter, in a sixth step S612, the gaseous fuel may be supplied from the first extension module 220 to the engine 102. In a seventh step S614, the further cooled exhaust gas may be supplied from the first extension module 220 to the engine 102 as charge air.

It is contemplated that there are numerous modifications of the embodiments described herein, which are still within the scope of the invention as defined by the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. An arrangement (200) for extracting heat from exhaust gas originating from an engine (102), the arrangement (200) comprising:
a scavenging air cooler (210) being configured to extract heat from the exhaust gas by a first cooling medium and thereby cooling the exhaust gas,
a first extension module (220) being arranged after the scavenging air cooler (210) and being configured to receive the cooled exhaust gas from the scavenging air cooler (210) and extract further heat from the cooled exhaust gas and to vaporize liquified fuel into gaseous fuel by the extracted heat, wherein the gaseous fuel is supplied to the engine (102), and
a connection (225) between the first extension module (220) and the engine (102) configured to supply the further cooled exhaust gas from the first extension module (220) to the engine (102) as charge air.

2. The arrangement (200) according to claim 1, wherein the first extension module (220) comprises a first heat exchanger (222) configured to exchange heat from the exhaust gas from the scavenging air cooler (210) to the liquified fuel by using the exhaust gas as a first medium and the liquified fuel as a second medium of the first heat exchanger (222).

3. The arrangement (200) according to claim 1, wherein the first extension module (220) comprises a first and a second heat exchanger (222a 222b) being interconnected in a heat exchange circuit and jointly exchanging heat from the exhaust gas from the scavenging air cooler (210) to the liquified fuel by using the exhaust gas as a first medium of the first heat exchanger (222a) and by using the liquified fuel as a second medium of the second heat exchanger (222b), and by using a common heat exchange medium as a second medium in the first heat exchanger (222a) and as a first medium in the second heat exchanger (222b).

4. The arrangement (200) according to claim 1 or 2, wherein the first extension module (220) is integrated in the scavenging air cooler (210).

5. The arrangement (200) according to any one of the preceding claims wherein the first extension module (220) is separated from and arranged in series with and connected to the scavenging air cooler (210) via a first exhaust gas supply line (211) being configured to receive the cooled exhaust gas from the scavenging air cooler (210) and to supply the cooled exhaust gas to the first extension module (220).

6. The arrangement (200) according to claim 1, wherein the arrangement (200) further comprises a second extension module (230) being arranged before the scavenging air cooler (210) and being configured to extract heat from the exhaust gas and supply the cooled exhaust gas to the scavenging air cooler (210).

7. The arrangement (200) according to claim 6, wherein the second extension module (230) is connected to a heat-to-power conversion arrangement (234) configured to convert heat extracted from the exhaust gas by the second extension module (230) into power.

8. The arrangement (200) according to any one of the preceding claims, wherein the second extension module (230) is integrated in the scavenging air cooler (210).

9. The arrangement (200) according to any one of claims 1 to 7,
wherein the second extension module (230) is separated from and arranged in series with and connected to the scavenging air cooler (210) via a second exhaust gas supply line (231) being configured to receive the cooled exhaust gas from the second extension module (230) and supply the cooled exhaust gas to the scavenging air cooler (210).

10. A method (600) for extracting heat from exhaust gas originating from an engine (102), the method comprising:
supplying the exhaust gas originating from the engine (102) to a scavenging air cooler (210),
extracting heat from the exhaust gas in the scavenging air cooler (210) by a first cooling medium and thereby cooling the exhaust gas,
supplying the cooled exhaust gas from the scavenging air cooler (210) to a first extension module (220),
extracting heat from the cooled exhaust gas in the first extension module (220) by a second cooling medium,
vaporizing liquified fuel into gaseous fuel by the extracted heat in the first extension module (220),
supplying the gaseous fuel from the first extension module (220) to the engine (102), and
supplying the further cooled exhaust gas from the first extension module (220) to the engine (102) as charge air.
